# EUROPÄISCHE PATENTSCHRIFT

(11) **EP 2 492 737 B1**
(45) Veröffentlichungstag und Bekanntmachung des Hinweises auf die Patenterteilung: **03.06.2020**
(21) Anmeldenummer: 12156692.1
(22) Anmeldetag: 23.02.2012
(51) Int. Cl.: G02B 21/00, G01N 21/64, G01J 3/44, G01J 3/02, G01J 3/10

(54) **Pulsvereiniger für die verschiedenen Spektralfarben eines Superkontinuum-Lasers**
Pulse unifier for different spectral colours of a super-continuum laser
Dispositif pour combiner des impulsions de couleurs spectrales différentes d'un laser supercontinu

(30) Priorität: 24.02.2011 DE 102011000905
(43) Veröffentlichungstag der Anmeldung: 29.08.2012
(73) Patentinhaber: Leica Microsystems CMS GmbH, 35578 Wetzlar (DE)
(72) Erfinder: Warken, Florian, 69518 Abtsteinach (DE); Gugel, Hilmar, 69221 Dossenheim (DE)
(74) Vertreter: Schaumburg und Partner Patentanwälte mbB

(56) Entgegenhaltungen:
- EP-A1- 1 986 030
- EP-A1- 2 423 727
- EP-A2- 2 458 750
- DE-A1- 10 259 443
- US-A1- 2006 237 666
- US-A1- 2008 260 319
- SEBASTIAN PRICKING ET AL: "Tailoring the soliton and supercontinuum dynamics by engineering the profile of tapered fibers", OPTICS EXPRESS, Bd. 18, Nr. 19, 13. September 2010 (2010-09-13), Seite 20151, XP55041800, ISSN: 1094-4087, DOI: 10.1364/OE.18.020151
- J. C. TRAVERS ET AL: "Optical pulse compression in dispersion decreasing photonic crystal fiber", OPTICS EXPRESS, Bd. 15, Nr. 20, 1. Januar 2007 (2007-01-01), Seite 13203, XP55041911, ISSN: 1094-4087, DOI: 10.1364/OE.15.013203
- L. FU ET AL: "Fibre-optic nonlinear optical microscopy and endoscopy", JOURNAL OF MICROSCOPY, Bd. 226, Nr. 3, 1. Juni 2007 (2007-06-01), Seiten 195-206, XP55041913, ISSN: 0022-2720, DOI: 10.1111/j.1365-2818.2007.01777.x
- S. LAKO ET AL: "Pulse compression of nanojoule pulses in the visible using microstructure optical fiber and dispersion compensation", APPLIED PHYSICS B: LASERS AND OPTICS, Bd. 76, Nr. 3, 1. März 2003 (2003-03-01), Seiten 267-275, XP55041938, ISSN: 0946-2171, DOI: 10.1007/s00340-002-1090-6

## Beschreibung

Die Erfindung betrifft eine Beleuchtungseinrichtung für ein Mikroskop und ein Mikroskop. Ferner betrifft die Erfindung ein Verfahren zum Erzeugen eines Beleuchtungslichtstrahls für ein Mikroskop.

Mikroskopische Verfahren zum Untersuchen von Objekten, insbesondere Proben oder Gewebeproben, erfordern teilweise Beleuchtungseinrichtungen, insbesondere Laservorrichtungen, die in der Lage sind, Laserlicht mit unterschiedlichen Wellenlängen zu erzeugen. Einige Mikroskopieverfahren erfordern es, dass die Beleuchtungseinrichtung das Laserlicht unterschiedlicher Wellenlängen gleichzeitig zur Verfügung stellt. Zu diesem Zweck eignen sich Superkontinuum-Laser, die auch Weißlichtlaser oder breitbandige Laserlichtquellen genannt werden. Diese erzeugen Laserlicht über ein breites Spektrum, insbesondere kontinuierlich über mehrere, insbesondere sichtbare und mit dem Auge unterscheidbare Farben hinweg, so dass das erzeugte breitbandige Laserlicht dem Auge als weißes Licht, also als Weißlicht erscheint.

Das weiße Laserlicht kann auf unterschiedliche Weisen erzeugt werden, beispielsweise indem das Licht eines herkömmlichen Lasers, insbesondere eines Lasers, der Laserlicht in einem sehr kleinen Wellenlängenbereich, insbesondere mit einer einzigen Wellenlänge erzeugt, in ein optisches Element eingekoppelt wird, das das Spektrum des Laserstrahls gezielt verbreitert. Als optisches Element eignet sich hierzu ein optisches Element, die eigens zum Verbreitern des Spektrums des Laserlichtstrahls konstruiert ist, im Gegensatz zu herkömmlichen optischen Elementen, wie z.B. Linsen, die das Spektrum als unerwünschten Nebeneffekt verbreitern. Insbesondere ist es bekannt, Lichtleitfasern derart zu konstruieren, dass bei deren Durchleuchtung starke nicht lineare optische Effekte auftreten, aufgrund derer das einfarbige Laserlicht spektral verbreitert und in weißes Laserlicht umgewandelt wird. Bei dem Verbreitern des Spektrums des Laserlichts treten regelmäßig Dispersionseffekte auf, die Einfluss auf das erzeugte weiße Laserlicht haben.

DE 101 15 486 A1 zeigt ein Verschränkte-Photonen-Mikroskop mit einer Lichtquelle und einem Objektiv. Das Verschränkte-Photonen-Mikroskop weist zwischen der Lichtquelle und dem Objektiv ein mikrostrukturiertes optisches Element auf, in dem verschränkte Photonen erzeugbar sind, wobei sich die verschränkten Photonen innerhalb und außerhalb des mikrostrukturierten optischen Elements in einem Strahl ausbreiten. Das mikrostrukturierte Element ist aus einer Vielzahl von mikrooptischen Strukturelementen aufgebaut, die zumindest zwei unterschiedliche optische Dichten aufweisen. Die mikroskopischen Strukturelemente sind beispielsweise Kanülen, Stege, Waben, Röhren oder Hohlräume. Alternativ oder zusätzlich kann das mikrostrukturierte optische Element Bereiche aufweisen, die im Wechsel homogene und inhomogene Strukturen aufweisen. Alternativ oder zusätzlich besteht das mikrostrukturierte optische Element aus nebeneinander angeordneten Glas- oder Kunststoffmaterialien und Hohlräumen und ist als Lichtleitfaser ausgestaltet. Die Fasern können durch ausziehen von strukturiert angeordneten Glasröhren oder Glasbrücken hergestellt werden.

Aus der DE 101 15 509 A1 ist ein Konfokalmikroskop bekannt, das ein optisches Bauelement zur spektralen Aufweitung eines von einem Pulslaser erzeugten Laserimpulses verwendet. Der Pulslaser erzeugt einen gepulsten Laserstrahl, der durch das optische Bauelement geleitet wird. Das optische Bauelement umfasst ein "photonic-band-gap"-Material, das den schmalbandigen gepulsten Laserstrahl in spektral breitbandiges Beleuchtungslicht umwandelt.

US 2006/0237666 A1 betrifft ein Multiphoton-Laserscanningmikroskop zur Erfassung von Fluoreszenzlicht, das durch Multiphotonen-Anregung erzeugt wird. Bei dieser Multiphotonen-Anregung werden extrem kurze Laserlichtpulse (im Femto-Sekundenbereich) in eine optische Faser eingeleitet, wobei der ultrakurze Laserlichtpuls zeitlich verbreitert wird. Mit Hilfe einer Kompensationseinheit wird der zeitlich verbreiterte Laserpuls so beeinflusst, dass ein effizienter Multiphotonen-Anregungseffekt entsteht.

DE 102 59 443 A1 betrifft ein Verfahren und eine Anordnung zur optischen Untersuchung und/oder Bearbeitung einer Probe, wobei kurzpulsiges Beleuchtungslicht spektral aufgespalten wird, um nach Zusammenführung der spektralen Anteile eine Multiphotonen-Anregung in einer Probe zu ermöglichen. Zur spektralen Aufspaltung werden Prismen, Transmissionsgitter oder Reflexionsgitter verwendet.

US 2008/0260319 A1 beschreibt eine Beleuchtungseinrichtung zum Erzeugen ultrakurzer Laserpulse, die in einen Lichtleiter eingekoppelt werden. Mit Hilfe einer Kompensationseinheit wird die Gruppenlaufzeit-Dispersion bei der Übertragung der Lichtpulse im Lichtleiter kompensiert.

Das unter Art 54(3) EPÜ relevante Dokument EP 2 423 727 A1 offenbart ein Lasermikroskop, das zum Untersuchen einer Probe eine Laserlichtquelle hat, die Laserlichtpulse erzeugt. Ein optisches Element ist im Strahlengang der Laserlichtpulse angeordnet. Das optische Element verbreitert das Wellenlängenspektrum der Laserlichtpulse. Unterschiedliche Wellenlängen aufweisende Anteile der breitbandigen Laserlichtpulse legen beim zweimaligen Durchlaufen einer Kompensationsvorrichtung unterschiedliche Weglängen zurück, so dass die unterschiedlichen Anteile zeitgleich auf die Probe treffen.

Es ist Aufgabe der vorliegenden Erfindung, eine Beleuchtungseinrichtung für ein Mikroskop, ein Mikroskop und ein Verfahren zum Erzeugen eines Beleuchtungslichtstrahls für ein Mikroskop zu schaffen, die bzw. das einen Beleuchtungslichtstrahl bereitstellt, der sich zum Beleuchten von Proben für präzise Mikroskopieverfahren eignet.

Die Aufgabe wird gelöst durch die Merkmale der unabhängigen Ansprüche. Vorteilhafte Ausgestaltungen sind in den Unteransprüchen angegeben.

Die Erfindung zeichnet sich gemäß einem ersten Aspekt durch eine zumindest einen breitbandigen Laserlichtpuls erzeugende Lasereinheit aus, wobei unterschiedliche Wellenlängen aufweisende Lichtanteile des breitbandigen Laserlichtpulses zeitlich zueinander versetzt sind. Im Strahlengang des breitbandigen Laserlichtpulses ist eine Kompensationseinheit angeordnet, die die Lichtanteile des breitbandigen Laserlichtpulses derart zeitlich versetzt, dass sie die Kompensationseinheit zeitgleich verlassen.

Das Kompensieren des zeitlichen Versatzes mit Hilfe der Kompensationseinheit bewirkt, dass die zeitliche Verteilung des aus der Beleuchtungseinrichtung austretenden weißen Laserlichtpulses besonders schmal ist. Dies trägt dazu bei, dass der breitbandige Laserlichtpuls nach Verlassen der Beleuchtungseinrichtung für zeitlich hoch aufgelöste mikroskopische Messung genutzt werden kann, beispielsweise für Fluorescence Lifetime Imaging (FLIM), insbesondere FLIM mit mehreren Wellenlängen.

Dass der Laserlichtpuls breitbandig ist, heißt in diesem Zusammenhang, dass er Wellenlängen aufweist, die kontinuierlich über ein größeres Wellenlängenintervall verteilt sind, beispielsweise über mehrere sichtbare und/oder mit dem bloßen Auge unterscheidbare Farbintervalle. Der breitbandige Laserlichtpuls wird auch als Superkontinuums-Laserlichtpuls oder Weißlicht-Laserpuls bezeichnet. Dass die Lichtanteile des breitbandigen Laserlichtpulses die Kompensationseinheit zeitgleich verlassen, bedeutet in diesem Zusammenhang, dass ein zeitlicher Abstand, mit dem die Lichtanteile die Kompensationseinheit verlassen, kleiner ist, als eine untere zeitliche Auflösungsgrenze des Detektors des Mikroskops. Das bedeutet, dass durchaus ein zeitlicher Versatz nach Durchlaufen der Kompensationseinheit vorhanden sein kann, dass dieser jedoch derart gering ist, dass die beim Detektor ankommenden Lichtpulse als zeitgleich ankommend detektiert werden. Der zeitliche Versatz in der Kompensationseinheit wird durch Ausnutzen von Dispersionseffekten in der Kompensationseinheit erreicht. Dabei sind die in der Kompensationseinheit auftretenden Dispersionseffekte den beim Erzeugen des breitbandigen Laserlichtpulses auftretenden Dispersionseffekten entgegengesetzt. Beispielsweise kann beim Erzeugen des breitbandigen Laserlichtpulses eine normale Dispersion und beim Kompensieren eine anomale Dispersion auftreten.

Die Lasereinheit kann Teil einer Laservorrichtung sein, die neben der Lasereinheit noch weitere Lasereinheiten umfasst. Gleichermaßen kann die Kompensationseinheit ein Teil einer Kompensationsvorrichtung sein, die mehrere Kompensationseinheiten umfasst.

In einer vorteilhaften Ausgestaltung ist ein optisches Element (akusto-optisch verstellbarer Filter) angeordnet, das aus dem breitbandigen Laserlichtpuls Laserlicht schmaler spektraler Wellenlängenbänder ausschneidet, so dass die Lichtanteile nach durchlaufen des optischen Elements zeitlich zueinander versetzt, spektral begrenzt und spektral voneinander beabstandet sind. In anderen Worten werden mit Hilfe des optischen Elements unterschiedliche Wellenlängenintervalle aufweisende Lichtanteile aus dem weißen Laserlichtpuls ausgeschnitten, was sie jeweils spektral begrenzt. Zwischen den einzelnen spektral begrenzten Lichtanteilen treten dann Lücken in dem zuvor kontinuierlichen Wellenlängenspektrum auf, so dass diese Lichtanteile spektral voneinander beabstandet sind. Aufgrund des zeitlichen Versatzes der unterschiedliche Wellenlängen aufweisenden Lichtanteile des Weißlicht-Laserpulses sind auch die spektral begrenzten und spektral beabstandeten Lichtanteile zeitlich zueinander versetzt.

Die Kompensationseinheit umfasst als Kompensationselement eine mikrostrukturierte Lichtleitfaser. Die mikrostrukturierte Lichtleitfaser kann auch als photonische Kristallfaser oder mikrostrukturierte optische Faser mit hoher Nicht-Linearität bezeichnet werden. Die mikrostrukturierte Lichtleitfaser kann Kanülen, Stege, Waben, Röhren oder andere Hohl- oder Lichtführungsräume aufweisen. Insbesondere kann die mikrostrukturierte Lichtleitfaser einen Glaskern oder einen Luftkern aufweisen.

In einer weiteren vorteilhaften Ausgestaltung umfasst die Kompensationseinheit als Kompensationselement eine verjüngte Faser (tapered fiber).

In einer vorteilhaften Ausgestaltung ist eine Dispersion der mikrostrukturierten Lichtleitfaser im Wesentlichen durch die Struktur und/oder Länge der mikrostrukturierten Lichtleitfaser vorgegeben. Dabei kann der Durchmesser der mikrostrukturierten Lichtleitfaser beispielsweise bei einer vorgegebenen Länge auf einen vorgegebenen Durchmesser verjüngt sein. Dabei kann es vorteilhaft sein, wenn sich die Struktur der mikrostrukturierten Lichtleitfaser adiabatisch ändert, d.h. derart, dass ein fließender und nicht gestufter Übergang stattfindet. Die Adiabasie ermöglicht hierbei eine verlustfreie Wellenleitung. Ferner kann es vorteilhaft sein, die mikrostrukturierte Lichtleitfaser nicht rotationssymmetrisch auszubilden, um die Polarisation des Laserlichtpulses zu erhalten.

Die Erfindung zeichnet sich gemäß einem zweiten Aspekt durch ein Mikroskop zum Untersuchen eines Objekts aus. Das Mikroskop ist mit der Beleuchtungseinrichtung gekoppelt und kann als konfokales Scannmikroskop ausgebildet sein.

Die Erfindung zeichnet sich gemäß einem dritten Aspekt durch ein Verfahren zum Erzeugen eines Beleuchtungslichtstrahls für ein Mikroskop aus, bei dem ein breitbandiger Laserlichtpuls erzeugt wird. Der breitbandige Laserlichtpuls weist zeitlich zueinander versetzte Lichtanteile unterschiedlicher Wellenlängen auf. Der breitbandige Laserlichtpuls und insbesondere dessen Lichtanteile werden in eine Kompensationseinheit eingekoppelt. Die Lichtanteile werden von der Kompensationseinheit zeitlich derart zueinander versetzt, dass sie die Kompensationseinheit zeitgleich verlassen.

Ausführungsbeispiele der Erfindung sind nachfolgend anhand von schematischen Zeichnungen näher erläutert.

Es zeigen:
- Figur 1: eine Beleuchtungseinrichtung und ein Mikroskop,
- Figur 2: ein Wellenlängen-Zeit-Diagramm,
- Figur 3: ein Kompensationselement,
- Figur 4: ein Wellenlängen-Dispersions-Diagramm,
- Figur 5: ein Ablaufdiagramm eines Verfahrens zum Erzeugen eines Beleuchtungslichtstrahls für ein Mikroskop.

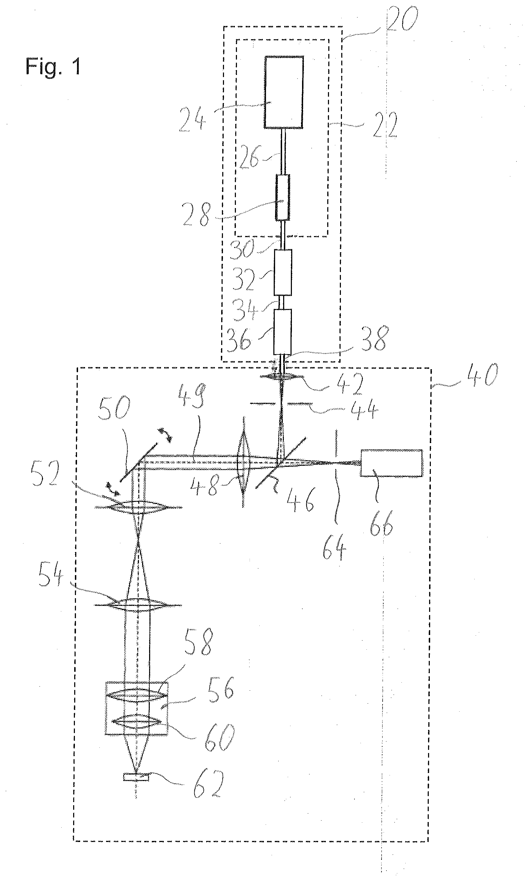

Figur 1 zeigt eine Beleuchtungseinrichtung 20 und ein Mikroskop 40. Die Beleuchtungseinrichtung 20 weist eine Laservorrichtung 22 auf, die eine Lasereinheit 24 umfasst. Alternativ dazu kann die Laservorrichtung 22 mehrere Lasereinheiten 24 aufweisen. Die Lasereinheit 24 erzeugt Einfarben-Laserlichtpulse 26. Die Einfarben-Laserlichtpulse 26 können auch als schmalbandige Laserlichtpulse oder Laserlichtpulse diskreter Wellenlängen bezeichnet werden. Die Wellenlänge der Einfarben-Laserlichtpulse 26 kann unveränderbar oder veränderbar sein und beispielsweise auf eine Wellenlänge zwischen 500 und 1600 nm, vorzugsweise zwischen 700 und 1000 nm, eingestellt werden. Als Lasereinheit eignet sich beispielsweise ein Ultrakurzpuls-Laser, insbesondere ein Titan-Saphir-Laser, der Laserlichtpulse im nahen Infrarot-Bereich erzeugt.

Die Einfarben-Laserlichtpulse 26 durchlaufen ein spektral verbreiterndes Element 28, das beispielsweise ein mikrostrukturiertes optisches Element, insbesondere eine mikrostrukturierte Lichtleitfaser sein kann, wie sie aus dem einleitend genannten Stand der Technik bekannt ist. Das spektral verbreiternde Element 28 bewirkt eine spektrale Aufweitung der Einfarben-Laserlichtpulse 26, und zwar derart, dass Weißlicht-Laserpulse 30 das spektral verbreiternde Element 28 verlassen. Die Weißlicht-Laserpulse 30 weisen ein breites kontinuierliches Wellenlängenspektrum auf, das sich beispielsweise über mehrere mit dem bloßen Auge unterscheidbaren Farben erstrecken kann. Die Weißlicht-Laserpulse 30 können ausschließlich im sichtbaren, im sichtbaren und nahen Infrarot-Bereich oder ausschließlich im nahen Infrarot-Bereich liegen. Aufgrund von Dispersionseffekten, beispielsweise aufgrund normaler Dispersion in dem spektral verbreiterten Element 28, sind Lichtanteile unterschiedlicher Wellenlänge der Weißlicht-Laserpulse 30 zeitlich zueinander versetzt, so dass die Weißlicht-Laserpulse 30 zeitlich verschmiert oder zeitlich verbreitert sind oder zeitlich eine breite Verteilung aufweisen. In anderen Worten passieren Photonen unterschiedlicher Spektralfarben eines der Weißlicht-Laserpulse 30 einen festen Ort zu unterschiedlichen Zeiten.

Die Weißlicht-Laserpulse 30 durchlaufen ein spektral aufspaltendes Element 32, das als akusto-optisch verstellbarer Filter (AOTF) ausgebildet ist. Das spektral aufspaltende Element 32 kann auch als optisches Element 32 bezeichnet werden und schneidet aus dem kontinuierlichen Spektrum der Weißlicht-Laserpulse 30 Laserlicht unterschiedlicher Wellenlängenintervalle aus, so dass spektral aufgespaltete Laserlichtpulse 34 das spektral aufspaltende Element 32 verlassen. Die spektral aufgespalteten Laserlichtpulse 34 haben kontinuierliche Wellenlängenspektren und sind spektral voneinander beabstandet, so dass nacheinander Lichtpulse unterschiedlicher Wellenlängen in eine Kompensationseinheit 36 eintreten. Das spektral aufspaltende Element 32 kann so ausgebildet sein, dass es gleichzeitig Licht mehrerer vorgegebener Wellenlängenintervalle passieren lässt.

Die Kompensationseinheit 36 bewirkt unter Ausnutzung von Dispersionseffekten, die den Dispersionseffekten in dem spektral verbreiterten Element 28 entgegengesetzt sind, beispielsweise unter Ausnutzung anomaler Dispersion, dass die spektral aufgespalteten und zeitlich zueinander versetzten Laserlichtpulse 34 wiederum zeitlich zueinander versetzt werden, und zwar so, dass zeitlich diskrete Weißlicht-Laserpulse 38 mit einer schmalen zeitlichen Verteilung die Kompensationseinheit 36 verlassen. Die diskreten Weißlicht-Laserpulse 38 weisen insbesondere keine zeitlich zueinander versetzten Lichtanteile auf. In anderen Worten bewirkt die Kompensationseinheit 36, dass die Photonen unterschiedlicher Spektralfarben eines der Weißlicht-Laserpulse 38 einen festen Ort gleichzeitig passieren.

Dass die Lichtanteile nicht zeitlich zueinander versetzt oder zeitgleich sind, bedeutet in diesem Zusammenhang, dass sie zumindest näherungsweise nicht zueinander versetzt sind. Das bedeutet in diesem Zusammenhang, dass der zeitliche Versatz zwischen einem ersten Wellenlängenpaket eines der Weißlicht-Laserpulse 38 und einem anderen Wellenlängenpaket des entsprechenden Weißlicht-Laserpulses 38 kleiner ist, als eine untere zeitliche Auflösungsgrenze eines Detektors des Mikroskops 40. Bleibt ein zeitlicher Restversatz der Wellenlängenpakete, so kann dieser nicht von dem Detektor aufgelöst werden und die Wellenlängenpakete werden als gleichzeitig ankommend klassifiziert.

Die zeitlich diskreten Weißlicht-Laserpulse 38 sind, beispielsweise über eine Lichtleitfaser, in das Mikroskop 40 eingekoppelt. Die Weißlicht-Laserpulse 38 sind mit Hilfe einer ersten Linse 42 auf eine Beleuchtungslochblende 44 abgebildet. Ein Strahlteiler 46 lenkt die Weißlicht-Laserpulse 38 in Richtung hin zu einer zweiten Linse 48, die einen parallelen Lichtstrahl mit einer Strahlachse 49 erzeugt. Der aus den Weißlicht-Laserpulsen 38 bestehende Lichtstrahl trifft auf eine Scaneinheit 50, die beispielsweise mit Hilfe eines oder mehrerer Spiegel die Weißlicht-Laserpulse 38 in Richtung hin zu einer dritten Linse 52 ablenkt. Die Scaneinheit 50 ermöglicht, mit Hilfe der Weißlicht-Laserpulse 38 eine Probe 62 optisch abzutasten.

Zwischen der dritten Linse 52 und der Probe 62 sind noch eine vierte Linse 54 und ein Objektiv 56 mit einer fünften Linse 58 und einer sechsten Linse 60 angeordnet, mit deren Hilfe der aus den Weißlicht-Laserpulsen 38 bestehende Beleuchtungslichtstrahl zum Beleuchten der Probe 62 geformt wird. Von der Probe 62 ausgehendes Detektionslicht, das beispielsweise rückreflektiertes Beleuchtungslicht und/oder Fluoreszenzlicht umfasst, wird über das Objektiv 56 zurück zu der Scaneinheit 50 und von der Scaneinheit 50 in Richtung hin zu einer Detektionslochblende 64 abgelenkt, wobei das Detektionslicht vor der Detektionslochblende 64 durch den Strahlteiler 46 tritt und nach der Detektionslochblende 64 auf eine Detektorvorrichtung 66 trifft, die zumindest einen Detektor umfasst.

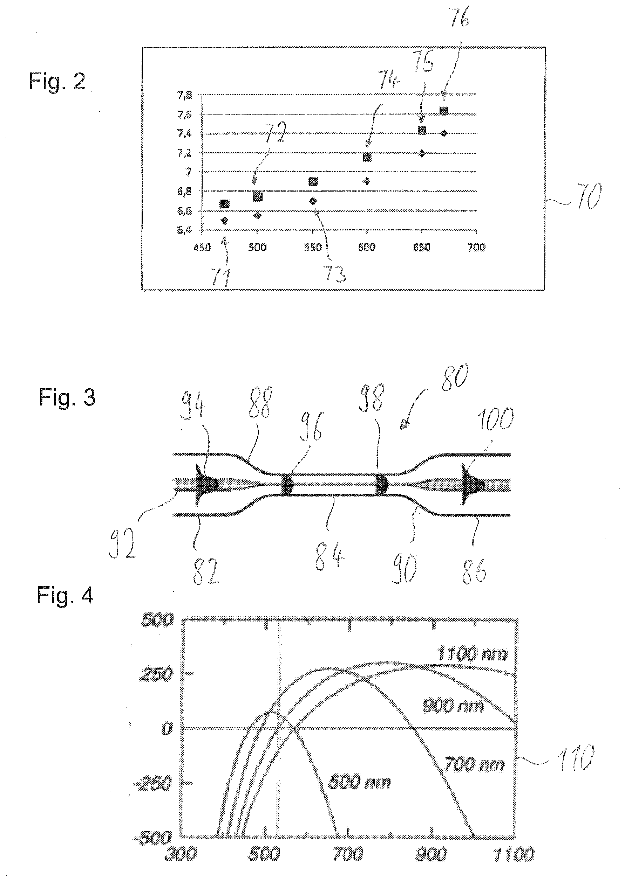

Figur 2 zeigt ein Wellenlängen-Zeit-Diagramm, auf dessen X-Achse Wellenlängen von 450 nm bis 700 nm angetragen sind. Entlang der Y-Achse ist die Zeit von 6,4 bis 7,8 ns angetragen. In dem Diagramm sind ein erster Lichtanteil 71, ein zweiter Lichtanteil 72, ein dritter Lichtanteil 73, ein vierter Lichtanteil 74, ein fünfter Lichtanteil 75 und ein sechster Lichtanteil 76 eingetragen. Die Lichtanteile 71, 72, 73, 74, 75, 76 weisen unterschiedliche Farben, beispielsweise rot und blau auf. Jeder der Lichtanteile 71, 72, 73, 74, 75, 76 umfasst in dem Diagramm eine Raute und ein Quadrat, die vertikal übereinander liegen, wobei die Raute den Beginn eines Lichtpulses und das Viereck das Ende eines Lichtpulses kennzeichnen. Die Messung der zeitlichen Verteilung der Lichtanteile 71, 72, 73, 74, 75, 76 erfolgt nach Austreten der Weißlicht-Laserpulse 30 mit zeitlich versetzten Lichtanteilen 71, 72, 73, 74, 75, 76 aus dem spektral aufspaltenden Element 32. Die Lichtanteile 71, 72, 73, 74, 75, 76 sind spektral begrenzt und spektral voneinander beabstandet. Der zeitliche Abstand der einzelnen Lichtanteile 71, 72, 73, 74, 75, 76 beträgt 50 bis 1000 ps. Das Wellenlängen-Zeit-Diagramm zeigt somit den zeitlichen Versatz unterschiedliche Wellenlängen aufweisender Lichtanteile 71, 72, 73, 74, 75, 76 der Weißlicht-Laserpulse 30.

Figur 3 zeigt ein Ausführungsbeispiel eines Kompensationselements 80, das in der Kompensationseinheit 36 angeordnet ist. Neben dem Kompensationselement 80 können noch weitere Kompensationselemente 80 in der Kompensationseinheit 36 parallel zueinander oder in Reihe zueinander angeordnet sein. Ferner kann die Kompensationseinheit 36 ein Teil einer Kompensationsvorrichtung sein, die neben der Kompensationseinheit 36 noch weitere Kompensationseinheiten umfasst.

Das Kompensationselement 80 besteht aus einer mikrostrukturierten Lichtleitfaser, deren Mikrostruktur aus Röhren, Kanülen oder Kanälen besteht. Das Kompensationselement 80 weist einen Einkoppelabschnitt 82 auf, in den die Weißlicht-Laserpulse 30 mit zeitlich zueinander versetzten Lichtanteilen eingekoppelt werden. Innerhalb des Kompensationselements 80 laufen die Weißlicht-Laserpulse 30 durch einen verjüngten Abschnitt 84 und treten an einem Auskoppelabschnitt 86 aus dem Kompensationselement 80 aus. Das Kompensationselement 80 kann an seinem Einkoppelabschnitt 82 und/oder an seinem Auskoppelabschnitt 86 an eine oder mehrere weitere Lichtleitfasern angeschweißt, insbesondere gespliced sein oder diese ganz oder teilweise ersetzen.

Die Übergänge von dem Einkoppelabschnitt 82 zum verjüngten Abschnitt 84 und vom verjüngten Abschnitt 84 zum Auskoppelabschnitt 86 sind bei diesem Ausführungsbeispiel adiabatisch ausgebildet, insbesondere sind ein erster adiabatischer Übergang 88 und ein zweiter adiabatischer Übergang 90 ausgebildet. Adiabatisch bedeutet in diesem Zusammenhang, dass der Übergang fließend und nicht gestuft stattfindet. Die adiabatischen Übergänge 88, 90 des Kompensationselements 80 tragen dazu bei, dass das Licht effizient und stabil eingekoppelt wird.

Das Kompensationselement 80 kann polarisationserhaltend ausgebildet sein, beispielsweise durch Brechen seiner Rotationssymmetrie. Das Kompensationselement 80 kann auch als ultradünne Glasfaser oder taperedfiber bezeichnet werden. Das Material des Kompensationselements 80 kann beispielsweise eine anomale Dispersion von 500 ps/nm/km gemittelt über den betreffenden Spektralbereich aufweisen. Ein Intensitätsverlust kann beispielsweise 45 dB/km betragen, was 10% Verlust auf 10 m oder mehr bedeutet. Eine Null-Dispersion kann blau-verschoben sein. Das Verjüngen des Kompensationselements kann auch als Dickenmodulation bezeichnet werden. Die Dickenmodulation kann dabei aufwendiger als beim gezeigten Ausführungsbeispiel gestaltet sein. Insbesondere kann die Dickenmodulation der Faser zur verbesserten Einkoppeleffizienz genutzt werden. Das Kompensationselement 80 kann beidseitig terminiert insbesondere an eine herkömmliche Glasfaser angeschweißt, insbesondere gespliced sein oder diese vollständig ersetzten. Das Terminieren kann beispielsweise durch Anbringen von Steckern oder Schweißen, insbesondere Splicen vorgenommen werden.

Das Licht tritt an dem Einkoppelabschnitt 82 in das Kompensationselement 80 ein und verläuft in der Lichtleitfaser in einem Faserkern 92 der Lichtleitfaser. Das eingekoppelte Licht in Form eines Lichtpulses 94 wird über den ersten adiabatischen Übergang 88 geleitet, wobei sich die Form des Lichtpulses 94 zu der Form des Lichtpulses 96 verändert. Im verjüngten Abschnitt 84 entsteht dann ein Lichtpuls 98 mit kompensierter Dispersion im ultradünnen Faserabschnitt, insbesondere dem verjüngten Abschnitt 84. Weiter wird das Licht über den zweiten adiabatischen Übergang 90 in einen dicken Faserabschnitt geleitet, in dem ein Lichtpuls 100 entsteht, bis das Licht an dem Auskoppelabschnitt 86 austritt.

Figur 4 zeigt ein Wellenlängen-Dispersions-Diagramm, das mehrere Dickenangaben aufweisende Kurven zeigt. Die Dickenangaben beziehen sich auf Dicken von verjüngten Abschnitten 84 unterschiedlicher Kompensationselemente 80. In dem Wellenlängen-Dispersions-Diagramm ist somit die wellenlängenabhängige Dispersion unterschiedlicher Kompensationselemente 80 dargestellt. Insbesondere ist die wellenlängenabhängige Dispersion bei einem Durchmesser des verjüngten Abschnitts 84 von 500 nm, 700 nm, 900 nm und 1100 nm dargestellt. Die horizontale Linie kennzeichnet die Null-Dispersion und die vertikale Linie kennzeichnet die Wellenlänge 532 nm.

Figur 4 zeigt, dass durch Vorgabe des Durchmessers des verjüngten Abschnitts 84 die Dispersion eingestellt werden kann. Dabei kann ein breiter Bereich, insbesondere der gesamte Bereich der Dispersion des Kompensationselements 80 zur Kompensation des zeitlichen Versatzes der Lichtanteile 71, 72, 73, 74, 75, 76 der Weißlicht-Laserpulse 30 ausgenutzt werden. Dadurch eröffnet sich ein großer Gestaltungs- und Kompensationsspielraum bei der Verwendung des Kompensationselements 80.

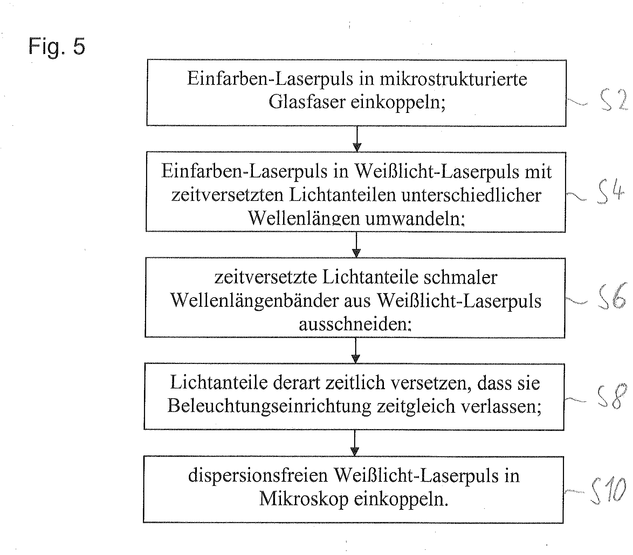

Figur 5 zeigt ein Ablaufdiagramm eines Verfahrens zum Erzeugen eines Beleuchtungslichtstrahls für das Mikroskop 40.

In einem Schritt S2 werden die Einfarben-Laserlichtpulse 26 als schmalbandiges Laserlicht, in das spektral verbreiternde Element 28 eingekoppelt, beispielsweise in eine mikrostrukturierte Glasfaser.

In einem Schritt S4 wandelt die mikrostrukturierte Glasfaser den Einfarben-Laserlichtpuls 26 in einen Weißlicht-Laserpuls 30 mit zeitlich zueinander versetzten Lichtanteilen 71, 72, 73, 74, 75, 76 um. Der zeitliche Versatz erfolgt beispielweise aufgrund normaler Dispersion.

In einem Schritt S6 werden zeitlich zueinander versetzte Lichtanteile 71, 72, 73, 74, 75, 76 schmaler Wellenlängenbänder aus dem Weißlicht-Laserpuls 30 ausgeschnitten.

In einem Schritt S8 werden die Lichtanteile 71, 72, 73, 74, 75, 76 derart zeitlich versetzt, insbesondere zeitlich zurück versetzt, dass sie die Beleuchtungseinrichtung 20 zeitgleich verlassen. Der zeitliche "zurück"-Versatz erfolgt beispielsweise aufgrund anomaler Dispersion. Dass die Lichtanteile 71, 72, 73, 74, 75, 76 die Beleuchtungseinrichtung 20 zeitgleich verlassen, bedeutet beispielsweise, dass sie die Beleuchtungseinrichtung innerhalb eines Intervalls verlassen, das kleiner als 50 bis 200 ps ist, da dies der zeitlichen Auflösungsgrenze des Detektors der Detektorvorrichtung 66 entspricht. Bei der Auflösungsgrenze des Detektors ist die gesamte Ansprechzeit des Detektors inklusive der verarbeitenden Elektronik berücksichtigt. Die Pulsbreiten der Weißlicht-Laserpulse 38 sollten dann kleiner als ein Viertel oder ein Zehntel der gesamten System-Respons bestehend aus der Ansprechzeit der Elektronik und des Detektors sein.

In einem Schritt S10 wird ein dispersionsfreier Weißlicht-Laserpuls 38, insbesondere ein Weißlicht-Laserpuls 38, dessen Lichtanteile unterschiedlicher Wellenlänge keinen zeitlichen Versatz oder zumindest näherungsweise keinen zeitlichen Versatz zueinander aufweisen, in das Mikroskop 40 eingekoppelt.

Das Bereitstellen der Weißlicht-Laserpulse 38 ohne zeitlich zueinander versetzte Lichtanteile 71, 72, 73, 74, 75, 76 vereinfacht eine Entfaltung zweier oder mehrerer Fluoreszenzkurven, insbesondere bei FLIM-Anwendungen. Ferner können auf vereinfachte Weise Proben mit mehreren Farbstoffen oder Fluoreszenzkurven analysiert werden. Eine Zeitersparnis ergibt sich dadurch, dass Proben mit zwei oder mehreren Farbstoffen oder Fluoreszenzkurven gleichzeitig vermessen werden können. Ferner können Resonanzexperimente durchgeführt werden, bei denen zwei Farben zugleich wirken, beispielsweise bei einem Fluoreszenzresonanzenergie-Transfer (FRET)-Verfahren.

Das Mikroskop 40 kann auch so ausgebildet sein, dass es zur Multiphotonen Anregung fähig ist. Alternativ dazu kann auch ein Weitfeldmikroskop vorgesehen sein, das die Kompensationseinheit 36 nutzt und mit dem insbesondere eine zeitaufgelöste Messung möglich ist. Ferner kann der Beleuchtungslichtstrahl mit den Weißlicht-Laserpulsen 38 ohne zeitlichen Versatz auch bei anderen Mikroskopen oder zu anderen mikroskopischen Verfahren wie FLIM eingesetzt werden.

### Bezugszeichenliste:

- 20: Beleuchtungseinrichtung
- 22: Laservorrichtung
- 24: Lasereinheit
- 26: Einfarben-Laserlichtpulse
- 28: spektral verbreiterndes Element
- 30: Weißlicht-Laserpulse mit zeitlich versetzten Lichtanteilen
- 32: optisches Element
- 34: spektral aufgespaltete Laserlichtpulse
- 36: Kompensationseinheit
- 38: Weißlicht-Laserpulse
- 40: Mikroskop
- 42: erste Linse
- 44: Beleuchtungslochblende
- 46: Strahlteiler
- 48: zweite Linse
- 49: Strahlachse
- 50: Scaneinheit
- 52: dritte Linse
- 54: vierte Linse
- 56: Objektiv
- 58: fünfte Linse
- 60: sechste Linse
- 62: Objektträger
- 64: Detektionslochblende
- 66: Detektorvorrichtung
- 70: Wellenlängen-Zeitdauer-Diagramm
- 71: erster Lichtanteil
- 72: zweiter Lichtanteil
- 73: dritter Lichtanteil
- 74: vierter Lichtanteil
- 75: fünfter Lichtanteil
- 76: sechster Lichtanteil
- 80: Kompensationselement
- 82: Einkoppelabschnitt
- 84: verjüngter Abschnitt
- 86: Auskoppelabschnitt
- 88: erster adiabatischer Übergang
- 90: zweiter adiabatischer Übergang
- 92: Faserkern
- 94: Lichtpuls im dicken Faserabschnitt
- 96: Lichtpuls im ultradünnen Faserabschnitt
- 98: Lichtpuls mit kompensierter Dispersion im ultradünnen Faserabschnitt
- 100: Lichtpuls mit kompensierter Dispersion im dicken Faserabschnitt
- 110: Wellenlängen-Dispersions-Diagramm

- S2-S10: Schritte zwei bis zehn

## Patentansprüche

1. Beleuchtungseinrichtung (20) für ein Mikroskop (40),
mit einer zumindest einen breitbandigen Laserlichtpuls (30) erzeugenden Lasereinheit (24), wobei unterschiedliche Wellenlängen aufweisende Lichtanteile (71, 72, 73, 74, 75, 76) des breitbandigen Laserlichtpulses (30) zeitlich zueinander versetzt sind,
mit einer Kompensationseinheit (36) im Strahlengang des breitbandigen Laserlichtpulses (30), die die Lichtanteile (71, 72, 73, 74, 75, 76) des breitbandigen Laserlichtpulses (30) derart zeitlich versetzt, dass sie die Beleuchtungseinrichtung (20) zeitgleich verlassen, und
mit einem akusto-optisch verstellbaren Filter (32), der aus dem breitbandigen Laserlichtpuls (30) Laserlicht schmaler spektraler Wellenlängenbänder ausschneidet, so dass die Lichtanteile (71, 72, 73, 74, 75, 76) nach Durchlaufen des akusto-optisch verstellbaren Filters (32) spektral begrenzt und spektral voneinander beabstandet sind,
wobei die Kompensationseinheit (36) als Kompensationselement (80) eine mikrostrukturierte Lichtleitfaser umfasst.

2. Beleuchtungseinrichtung (20) nach Anspruch 1,
bei der die Kompensationseinheit (36) als Kompensationselement (80) eine verjüngte Faser (tapered fiber) umfasst.

3. Beleuchtungseinrichtung (20) nach einem der Ansprüche 1 oder 2,
bei der die mikrostrukturierte Lichtleitfaser einen Glaskern oder einen Luftkern aufweist.

4. Beleuchtungseinrichtung (20) nach einem der Ansprüche 1 bis 3,
bei der die Dispersion der mikrostrukturierten Lichtleitfaser durch die Struktur und/oder Länge der mikrostrukturierten Lichtleitfaser vorgegeben ist.

5. Beleuchtungseinrichtung (20) nach Anspruch 4,
bei der sich die Struktur der mikrostrukturierten Lichtleitfaser derart ändert, dass ein fließender und nicht gestufter Übergang stattfindet.

6. Beleuchtungseinrichtung (20) nach einem der Ansprüche 2 bis 5,
bei der die mikrostrukturierte Lichtleitfaser nicht rotationssymmetrisch ausgebildet ist.

7. Verwendung eines breitbandigen Laserlichtpulses, der mit Hilfe der Beleuchtungseinrichtung nach einem der Ansprüche 1 bis 6 nach Verlassen der Beleuchtungseinrichtung erzeugt wurde, in einer zeitlich hoch aufgelösten mikroskopischen Messung, beispielsweise in einem Fluorescence Lifetime Imaging (FLIM).

8. Mikroskop (40) zum Untersuchen eines Objekts,
das mit der Beleuchtungseinrichtung (20) nach einem der Ansprüche 1 bis 7 gekoppelt ist.

9. Mikroskop (40) nach Anspruch 8,
das als konfokales Scanmikroskop ausgebildet ist.

10. Verfahren zum Erzeugen eines Beleuchtungslichtstrahls mittels einer Beleuchtungseinrichtung (20) für ein Mikroskop (40),
bei dem ein breitbandiger Laserlichtpuls (30) erzeugt wird, der zeitlich zueinander versetzte Lichtanteile (71, 72, 73, 74, 75, 76) unterschiedlicher Wellenlängen aufweist,
die zeitlich zueinander versetzten Lichtanteile (71, 72, 73, 74, 75, 76) in eine Kompensationseinheit (36) eingekoppelt werden,
und bei dem die Lichtanteile (71, 72, 73, 74, 75, 76) in der Kompensationseinheit (36) derart zeitlich zueinander versetzt werden, dass sie die Beleuchtungseinrichtung (20) zeitgleich verlassen,
wobei ein akusto-optisch verstellbarer Filter (32) aus dem breitbandigen Laserlichtpuls (30) Laserlicht schmaler Wellenlängenbänder ausschneidet, so dass die Lichtanteile (71, 72, 73, 74, 75, 76) nach Durchlaufen des akusto-optischen Filters (32) spektral begrenzt und spektral beabstandet sind, und
wobei die Kompensationseinheit (36) als Kompensationselement (80) eine mikrostrukturierte Lichtleitfaser umfasst.

## Claims

1. Illumination apparatus (20) for a microscope (40), having a laser unit (24), which generates at least one broadband laser light pulse (30), wherein light components (71, 72, 73, 74, 75, 76) of the broadband laser light pulse (30) having different wavelengths are temporally offset with respect to one another,
having a compensation unit (36) in the beam path of the broadband laser light pulse (30), which compensation unit temporally offsets the light components (71, 72, 73, 74, 75, 76) of the broadband laser light pulse (30) in such a way that they leave the illumination apparatus (20) at the same time, and
having an acousto-optic adjustable filter (32), which cuts out laser light in narrow spectral wavelength bands from the broadband laser light pulse (30) so that after passing through the acousto-optic adjustable filter (32), the light components (71, 72, 73, 74, 75, 76) are spectrally limited and spectrally spaced apart from one another,
wherein the compensation unit (36) comprises a microstructured optical fibre as a compensation element (80).

2. Illumination apparatus (20) according to Claim 1, in which the compensation unit (36) comprises a tapered fibre as a compensation element (80).

3. Illumination apparatus (20) according to either of Claims 1 and 2,
in which the microstructured optical fibre has a glass core or an air core.

4. Illumination apparatus (20) according to any of Claims 1 to 3,
in which the dispersion of the microstructured optical fibre is prespecified by the structure and/or length of the microstructured optical fibre.

5. Illumination apparatus (20) according to Claim 4,
in which the structure of the microstructured optical fibre changes in such a way that a fluid and non-stepped transition occurs.

6. Illumination apparatus (20) according to any of Claims 2 to 5,
in which the microstructured optical fibre has an embodiment that is not rotationally symmetric.

7. Use of a broadband laser light pulse, which was generated with the aid of the illumination apparatus according to any of Claims 1 to 6 after leaving the illumination apparatus, in a temporally highly resolved microscopic measurement, for example in fluorescence lifetime imaging (FLIM).

8. Microscope (40) for examining an object,
which is coupled to the illumination apparatus (20) according to any of Claims 1 to 7.

9. Microscope (40) according to Claim 8,
which is embodied as a confocal scanning microscope.

10. Method for generating an illumination light beam by means of an illumination apparatus (20) for a microscope (40),
in which a broadband laser light pulse (30) is generated, which has light components (71, 72, 73, 74, 75, 76) of different wavelengths temporally offset with respect to one another,
the light components (71, 72, 73, 74, 75, 76) temporally offset with respect to one another are coupled into a compensation unit (36),
and in which the light components (71, 72, 73, 74, 75, 76) are temporally offset with respect to one another in the compensation unit (36) in such a way that they leave the illumination apparatus (20) at the same time, wherein an acousto-optic adjustable filter (32) cuts out laser light in narrow wavelength bands from the broadband laser light pulse (30) so that after passing through the acousto-optic filter (32), the light components (71, 72, 73, 74, 75, 76) are spectrally limited and spectrally spaced, and
wherein the compensation unit (36) comprises a microstructured optical fibre as a compensation element (80).

## Revendications

1. Dispositif d'éclairage (20) pour un microscope (40), comprenant
une unité laser (24) générant au moins une impulsion de lumière laser à large bande (30), des fractions de lumière (71, 72, 73, 74, 75, 76) présentant des longueurs d'onde différentes de l'impulsion de lumière laser à large bande (30) étant décalées dans le temps les unes par rapport aux autres,
une unité de compensation (36) sur la trajectoire des rayons de l'impulsion de lumière laser à large bande (30) qui décale les fractions de lumière (71, 72, 73, 74, 75, 76) de l'impulsion de lumière laser à large bande (30) dans le temps de telle sorte qu'elles quittent le dispositif d'éclairage (20) en même temps, et
un filtre à réglage acousto-optique (32) qui découpe à partir de l'impulsion de lumière laser à large bande (30) une lumière laser à bandes de longueur d'onde spectrales étroites de sorte que les fractions de lumière (71, 72, 73, 74, 75, 76) sont spectralement limitées et spectralement espacées les unes par rapport aux autres après le passage par le filtre à réglage acousto-optique (32),
l'unité de compensation (36) comprenant une fibre optique microstructurée comme élément de compensation (80).

2. Dispositif d'éclairage (20) selon la revendication 1, dans lequel l'unité de compensation (36) comprend une fibre conique (en anglais « tapered fiber ») comme élément de compensation (80).

3. Dispositif d'éclairage (20) selon l'une quelconque des revendications 1 et 2, dans lequel la fibre optique microstructurée présente un noyau de verre ou un noyau d'air.

4. Dispositif d'éclairage selon l'une quelconque des revendications 1 à 3, dans lequel la dispersion de la fibre optique microstructurée est prédéfinie par la structure et/ou la longueur de la fibre optique microstructurée.

5. Dispositif d'éclairage (20) selon la revendication 4, dans lequel la structure de la fibre optique microstructurée change de telle sorte qu'une transition progressive et non graduée a lieu.

6. Dispositif d'éclairage (20) selon l'une quelconque des revendications 2 à 5, dans lequel la fibre optique microstructurée n'est pas réalisée en symétrie de révolution.

7. Utilisation d'une impulsion de lumière laser à large bande générée à l'aide du dispositif d'éclairage selon l'une quelconque des revendications 1 à 6 après avoir quitté le dispositif d'éclairage, dans une mesure microscopique à haute résolution temporelle, par exemple dans l'imagerie de durée de vie de fluorescence (FLIM).

8. Microscope (40) permettant d'examiner un objet, couplé au dispositif d'éclairage (20) selon l'une quelconque des revendications 1 à 7.

9. Microscope (40) selon la revendication 8, réalisé sous forme de microscope confocal à balayage.

10. Procédé de génération d'un rayon lumineux d'éclairage au moyen d'un dispositif d'éclairage (20) pour un microscope (40),
dans lequel une impulsion de lumière laser à large bande (30) est générée, qui présente des fractions de lumière (71, 72, 73, 74, 75, 76) de différentes longueurs d'onde et décalées dans le temps les unes par rapport aux autres,
les fractions de lumière (71, 72, 73, 74, 75, 76) décalées dans le temps les unes par rapport aux autres sont injectées dans une unité de compensation (36),
et dans lequel les fractions de lumière (71, 72, 73, 74, 75, 76) dans l'unité de compensation (36) sont décalées dans le temps les unes par rapport aux autres de telle sorte qu'elles quittent le dispositif d'éclairage (20) en même temps,
dans lequel un filtre à réglage acousto-optique (32) découpe l'impulsion de lumière laser à large bande (30) en lumière laser à bandes de longueur d'onde étroites de sorte que les fractions de lumière (71, 72, 73, 74, 75, 76) sont spectralement limitées et spectralement espacées après le passage par le filtre acousto-optique (32), et
dans lequel l'unité de compensation (36) comprend une fibre optique microstructurée comme élément de compensation (80).
